# EUROPÄISCHE PATENTSCHRIFT

(11) **EP 3 337 769 B1**
(45) Veröffentlichungstag und Bekanntmachung des Hinweises auf die Patenterteilung: **03.04.2019**
(21) Anmeldenummer: 16757190.0
(22) Anmeldetag: 15.08.2016
(51) Int. Cl.: C03B 23/03, C03B 23/025, C03B 23/035, C03B 35/14

(54) **GLASBIEGEVORRICHTUNG UND -VERFAHREN UNTER VERWENDUNG EINES VENTILATORS**
GLASS BENDING DEVICE AND METHOD USING A VENTILATOR
DISPOSITIF DE CINTRAGE DU VERRE ET PROCEDE UTILISANT UN VENTILATEUR

(30) Priorität: 18.08.2015 EP 15181395
(43) Veröffentlichungstag der Anmeldung: 27.06.2018
(73) Patentinhaber: Saint-Gobain Glass France, 92400 Courbevoie (FR)
(72) Erfinder: BALDUIN, Michael, 52477 Alsdorf (DE); RADERMACHER, Herbert, 4730 Raeren (BE); SCHALL, Günther, 52372 Kreuzau (DE)
(74) Vertreter: Feist, Florian Arno
(86) Internationale Anmeldenummer: PCT/EP2016/069317
(87) Internationale Veröffentlichungsnummer: WO 2017/029252

(56) Entgegenhaltungen:
- DE-T2- 69 423 700
- FR-A1- 2 097 019
- US-A- 4 764 196
- US-A1- 2013 340 479

## Beschreibung

Die Erfindung betrifft eine Glasbiegevorrichtung, ein damit durchführbares Glasbiegeverfahren und die Verwendung eines Ventilators in einer solchen Vorrichtung.

Im Fahrzeugbereich sind gebogene Verbundgläser üblich, insbesondere als Windschutzscheiben. Es ist bekannt, dass es vorteilhaft ist, die Einzelscheiben des Verbundglases gemeinsam simultan zu biegen. Paarweise gebogene Glasscheiben sind hinsichtlich ihrer Biegung aufeinander abgestimmt und eignen sich daher in besonderem Maße, miteinander zum Verbundglas laminiert zu werden. Ein Verfahren zum paarweisen Biegen von Glasscheiben ist beispielsweise aus DE 101 05 200 A1 bekannt.

EP 1 836 136 B1 offenbart ein weiteres Biegeverfahren sowie ein gattungsgemäßes Werkzeug, dort bezeichnet als obere Form (forme superieure). Das konvexe Werkzeug wird als obere Form in einem Biegeverfahren eingesetzt und ist dazu geeignet, die zu biegenden Glasscheiben gegen den Einfluss der Schwerkraft zu halten. Das Haltewerkzeug umfasst eine rahmenartige, konvexe Kontaktfläche und eine Abdeckung mit einem peripheren Luftleitblech. Durch eine Saugwirkung entlang der Scheibenkanten wird die zu biegende Glasscheibe entgegen der Wirkung der Schwerkraft an die Kontaktfläche angepresst und dadurch sicher am Werkzeug gehalten. Auch zwei aufeinander liegende Glasscheiben können simultan im Werkzeug gehalten werden. Das Werkzeug kann verwendet werden, um die Glasscheiben zwischen verschiedenen Positionen der Biegevorrichtung zu transportieren, beispielsweise um die Glasscheiben von einer Biegeform zu übernehmen und an eine andere zu übergeben. Das Werkzeug kann auch für einen Pressbiegeschritt verwendet werden, wobei die Glasscheiben zwischen dem Werkzeug und einer komplementären Gegenform unter Einwirkung von Druck- und/oder Saugwirkung geformt wird. Das Luftleitblech wird im Fachjargon auch als Schürze bezeichnet, das Halten der Glasscheiben mittels des Luftleitblechs als Schürzentechnik.

Die zum Halten der Glasscheiben an der oberen Form nötige Saugwirkung wird typischerweise mittels sogenannter Venturi-Düsen erzeugt, die mit Pressluft betrieben werden. Um eine Abkühlung des Biegeofens zu vermeiden, muss die Pressluft vorgeheizt werden. Der Erzeugung von vorgeheizter Pressluft in ausreichender Menge bedingt einen hohen Energieverbrauch. Die hierfür nötige Anlage ist komplex und kostenintensiv.

Es besteht daher Bedarf an einer verbesserten Biegevorrichtung und einem verbesserten Biegeverfahren, wobei die zum Halten an einer oberen Form nötige Saugwirkung einfacher, kostengünstiger und mit geringerem Energieaufwand erzeugt werden kann.

US4,764,196 offenbart eine Biegevorrichtung mit Schürzentechnik, wobei der zum Halten nötige Luftstrom mittels eines Ventilators erzeugt wird. Die Glasscheibe wird mittels der Schürzentechnik gegen eine obere Vollform (eine Form mit vollflächiger Kontaktfläche, im Gegensatz zu einer rahmenartigen Kontaktfläche) angesaugt. Der Ventilator ist unterhalb der Biegekammer angeordnet. Die abgesaugte Luft wird in einem Kreislauf geführt und von unten wieder auf die Scheibe geleitet, um eine unerwünschte Deformation der Scheibe durch Schwerkrafteinfluss zu vermeiden. Der Luftkreislauf ist mit einer aktiven Heizvorrichtung ausgestattet, um die Luft auf die gewünschte Temperatur zu bringen.

DE 3615 225 A1 offenbart eine Biegevorrichtung mit einem Querstromgebläse, welches einen im Kreislauf geführten Luftstrom erzeugt, mit dem die Scheibe gegen eine obere Form angedrückt wird. Der Luftkreislauf ist mit einer aktiven Heizvorrichtung ausgestattet, um die Luft zu temperieren.

US 2013340479 A1 offenbart eine weitere Biegevorrichtung mit Schürzentechnik, wobei die Glasscheibe gegen eine rahmenartige Kontaktfläche angesaugt wird. Die benötigte Saugwirkung wird mit einer nicht näher spezifizierten Saugvorrichtung erzielt.

DE 69423700 T2 offenbart eine weitere Biegevorrichtung mit Schürzentechnik, wobei die Glasscheibe gegen eine obere Vollform angesaugt wird. Die Saugwirkung wird mit Venturi-Düsen erreicht.

FR 2097019 A1 offenbart ein Floatglass-Verfahren zur Herstellung von Flachglas, wobei das Glasband dem Zinnbad durch eine Saugwirkung entnommen wird. Die Saugwirkung wird durch eine nicht näher spezifizierte Pumpe erzeugt.

Der vorliegenden Erfindung liegt die Aufgabe zugrunde, eine verbesserte Biegevorrichtung und eine verbessertes Biegeverfahren bereitzustellen unter Verwendung der Schürzentechnik zum Halten der Glasscheiben.

Die Aufgabe der Erfindung wird erfindungsgemäß durch eine Glasbiegevorrichtung gemäß Anspruch 1 gelöst. Bevorzugte Ausführungen gehen aus den Unteransprüchen hervor.

Die erfindungsgemäße Vorrichtung umfasst eine Biegekammer. Unter einer Biegekammer wird im Sinne der Erfindung ein Raumsegment eines Biegeofens verstanden, welches mittels einer Heizvorrichtung auf eine vorbestimmte Temperatur gebracht werden kann, um Glasscheiben zu biegen. Die Biegekammer verfügt typischerweise über einen Eingang und einen Ausgang, über die die zu biegenden Glasscheiben in die Biegekammer hinein und aus der Biegekammer hinaus transportiert werden können. Der Transport erfolgt typischerweise auf Rollen oder auf einem Wagen.

Die erfindungsgemäße Vorrichtung umfasst außerdem ein Werkzeug zum Halten mindestens einer Glasscheibe durch eine Saugwirkung (Haltewerkzeug). Das Werkzeug ermöglicht während eines Biegeprozesses das Halten der zu biegenden Glasscheibe gegen den Einfluss der Schwerkraft, indem eine durch einen Unterdruck erzeugte Saugwirkung auf die Glasscheibe ausgeübt wird, so dass die Glasscheibe infolge der Saugwirkung an das Werkzeug angepresst wird. Das Werkzeug kann auch als Saugform bezeichnet werden.

Das Werkzeug umfasst eine Kontaktfläche, die mit der zu haltenden Glasscheibe in Kontakt gebracht wird. Die Kontaktfläche ist rahmenartig. Das Werkzeug ist also kein sogenanntes vollflächiges Werkzeug, bei dem die Glasscheibe mit einer Formfläche vollflächig in Kontakt gebracht wird. Es gehört vielmehr zur Gruppe der Werkzeuge, bei denen in peripherer Bereich der Glasscheibe an den Seitenkanten oder in der Nähe der Seitenkanten mit dem Werkzeug in direktem Kontakt steht, während der größte Teil der Scheibe keinen direkten Kontakt zum Werkzeug hat. Ein solches Werkzeug kann auch als Ring (Haltering, Biegering) oder Rahmen (Rahmenform) bezeichnet werden. Der Begriff "rahmenartige Kontaktfläche" im Sinne der Erfindung dient lediglich zur Abgrenzung des erfindungsgemäßen Werkzeugs von einer vollflächigen Form (Vollform). Die Kontaktfläche muss keinen vollständigen Rahmen bilden, sondern kann auch unterbrochen sein. Die Kontaktfläche ist in Form eines vollständigen oder unterbrochenen Rahmens ausgebildet. Die Breite der Kontaktfläche beträgt bevorzugt von 0,1 cm bis 10 cm, besonders bevorzugt von 0,2 cm bis 1 cm, beispielsweise 0,3 cm. Das Werkzeug ist weiter mit einem sogenannten Skelett ausgestattet, worunter eine flächige Struktur verstanden ist, welche die Kontaktfläche trägt. Das Skelett ist mit der Kontaktfläche ausgebildet. Die Kontaktfläche ist auf dem Skelett angeordnet.

Die Kontaktfläche ist konvex ausgebildet. Unter einer konvexen Form wird dabei eine Form verstanden, bei der die Ecken und Ränder der Glasscheibe im bestimmungsgemäßen Kontakt mit dem Werkzeug näher in Richtung des Werkzeugs gebogen sind als die Scheibenmitte. Das erfindungsgemäße Werkzeug ist daher ein sogenanntes konvexes Werkzeug.

Die Kontaktfläche ist nach unten gerichtet. Das bedeutet, dass die Kontaktfläche dem Erdboden zugewandt ist und das sie tragende Skelett oberhalb der Kontaktfläche (das heißt auf der vom Erdboden abgewandten Seite der Kontaktfläche) angeordnet ist. So kann das Werkzeug die Glasscheibe gegen den Einfluss der Schwerkraft halten.

Das Werkzeug umfasst außerdem eine Abdeckung. Die Abdeckung ist auf der Seite der Kontaktfläche angeordnet, welche während des Halte- oder Biegevorgangs von der Glasscheibe abgewandt ist. Die Abdeckung ermöglicht das Erzeugen der für den Haltevorgang wesentlichen Saugwirkung. Die Saugwirkung wird insbesondere durch Absaugen der Luft zwischen Abdeckung und Biegeskelett erzeugt. Das Absaugen der Luft erfolgt über ein an die Abdeckung angeschlossenes Ansaugrohr.

Die Abdeckung ist mit einem peripheren, die Kontaktfläche zumindest bereichsweise umgebende Luftleitblech ausgebildet. Ein solches Luftleitblech wird häufig auch als Schürze bezeichnet. Das Luftleitblech ist bevorzugt am Ende der Abdeckung angeordnet. Das Luftleitblech umgibt oder umrahmt die Kontaktfläche vollständig oder abschnittsweise. Während des Haltevorgangs weist das Luftleitblech bevorzugt einen Abstand zu den Seitenkanten der Glasscheibe von 3 mm bis 50 mm auf, besonders bevorzugt von 5 mm bis 30 mm, beispielsweise 20 mm auf. Durch das Luftleitblech wird der durch die Saugwirkung erzeugt Luftstrom entlang der Seitenkante der Glasscheibe geleitet, sodass die Kante mit dem Luftstrom bestrichen wird. Dadurch wird die Glasscheibe an die Kontaktfläche angedrückt beziehungsweise angesaugt.

Das Werkzeug kann dadurch insbesondere als obere Form in einem Biegeprozess verwendet werden. Unter einer oberen Form wird eine Form verstanden, welche die obere, vom Erdboden abgewandte Oberfläche der Glasscheibe kontaktiert. Unter einer unteren Biegeform wird eine Form verstanden, welche die untere, dem Erdboden zugewandte Oberfläche der Glasscheibe kontaktiert. Die Glasscheibe kann auf eine untere Form abgelegt werden.

Auch mehrere, beispielsweise zwei aufeinander liegende Glasscheiben können durch das erfindungsgemäße Werkzeug simultan gehalten werden. Das Werkzeug eignet sich daher besonders für Verfahren des paarweisen Biegens, bei denen zwei Einzelscheiben, die später zu einem Verbundglas laminiert werden sollen, gemeinsam simultan kongruent gebogen werden.

Die erfindungsgemäße Vorrichtung umfasst außerdem einen Ventilator, der über eine Zuleitung und eine Rückleitung mit der Biegekammer verbunden ist. Der Ventilator ist dazu geeignet und entsprechend konfiguriert, dass Luft über das erfindungsgemäße Haltewerkzeug und die Zuleitung aus der Biegekammer abgesaugt wird und über die Rückleitung wieder in die Biegekammer zurückgeleitet wird. Zuleitung, Ventilator und Rückleitung bilden einen Kreislauf, in dem der zum Halten der Glasscheibe nötige Luftstrom erzeugt wird. Die Zuleitung ist einerseits an das Haltewerkzeug, insbesondere das Ansaugrohr des Haltewerkzeugs und andererseits an den Ventilator angeschlossen. Die Rückleitung ist einerseits an den Ventilator und andererseits an die Biegekammer angeschlossen.

Der große Vorteil der Erfindung liegt in der Verwendung des Ventilators zur Erzeugung des Luftstroms. Dies macht die bislang üblichen Venturi-Düsen und die Erzeugung von erwärmter Pressluft überflüssig. Das Glasbiegen kann somit deutlich energiesparender gestaltet werden. Zudem vereinfacht sich der technische Aufbau der Biegevorrichtung. Zudem wird der Biegekammer auch kein zusätzliches Luftvolumen zugeleitet, wie es bei der Verwendung von Venturi-Düsen unumgänglich ist. So können unerwünschte Luftströmungen vermieden werden, welche den Biegeprozess stören können. Außerdem wird durch ein zusätzliches Luftvolumen ein Überdruck innerhalb der Biegekammer erzeugt, die zum Entweichen von warmer Luft führt, was mit zusätzlichen Energieverlusten verbunden ist. Der erfindungsgemäße Ventilator vermeidet dieses Problem.

Erfindungsgemäß ist die Rückleitung oberhalb des Werkzeugs an die Biegekammer angeschlossen. Das bedeutet, dass die Stelle, an der Luft in die Kammer zurückgeleitet wird, weiter vom Erdboden entfernt ist als das Haltewerkzeug. Besonders bevorzugt ist die Rückleitung an der Oberseite der Biegekammer angeordnet, womit die nach oben begrenzende Fläche (das "Dach") gemeint ist. Diese Anordnung ermöglicht zum einen eine kompakte Bauweise und gewährleistet zum anderen, dass der Biegeprozess durch den bei der Rückleitung erzeugten Luftstrom nicht gestört wird.

In einer besonders bevorzugten Ausgestaltung ist auch die Zuleitung oberhalb des Werkzeugs an die Biegekammer angeschlossen sind, ganz besonders bevorzugt an der Oberseite der Biegekammer.

In einer bevorzugten Ausgestaltung ist die Rückleitung derart an die Biegekammer angeschlossen ist, dass die Glasscheibe nicht angeblasen, das heißt mit dem rückfließenden Luftstrom beaufschlagt wird. Der Kreislauf dient erfindungsgemäß lediglich dazu, die Saugwirkung zu erzeugen. Die rückfließende Luft soll den Biegeprozess so wenig wie möglich beeinflussen. Insbesondere ein direktes Anblasen der Scheibe hätte auf die Biegung Auswirkungen und sollte daher vermieden werden. Da sich die Luft im Kreislauf außerhalb der Biegekammer abkühlen kann, würde ein direktes Anblasen auch zu einer unerwünschten Abkühlung der Scheibe führen.

Der Ventilator ist bevorzugt ein Radialventilator. Die Drehzahl des Radialventilators im Betrieb beträgt bevorzugt mindestens 500 U/min. Damit werden besonders gute Ergebnisse erzielt. Es können auch mehrere Ventilatoren eingesetzt werden.

In einer bevorzugten Ausgestaltung ist der Ventilator nicht unterhalb der Biegekammer angeordnet. Dadurch kann vermieden werden, dass im Falle von Glasbruch Glasfragmente in den Ventilator hineinfallen, was umfangreiche Reinigungs- und Wartungsarbeiten nötig machen würde. Der Ventilator kann neben oder oberhalb der Biegekammer angeordnet sein. Die Anordnung oberhalb der Biegekammer ermöglicht eine besonders kompakte Bauweise.

Die Zuleitung ist bevorzugt mit einer verstellbaren Klappe versehen, durch welche die Zuleitung ganz oder teilweise verschlossen werden kann. So kann die Stärke des Luftstroms reguliert werden und der Luftstrom ausgeschaltet werden, ohne dass der Ventilator selbst bedient werden muss.

In einer vorteilhaften Ausgestaltung ist der Kreislauf, der durch die Zuleitung, den Ventilator und die Rückleitung gebildet wird, nicht mit einer Heizung ausgestattet, was einen einfachen technischen Aufbau der Vorrichtung ermöglicht. Die erfindungsgemäße Vorrichtung macht keine aktive Erwärmung der Luft im Kreislauf außerhalb der Biegekammer erforderlich. Die durch den Ventilator hervorgerufene Kompression der angesaugten Luft führt zu einer Erwärmung. Es hat sich gezeigt, dass dieser Effekt die Abkühlung der Luft außerhalb der Biegekammer kompensiert.

In einer vorteilhaften Ausgestaltung umfasst die Vorrichtung außerdem eine vollflächige untere Biegeform. Unter einer vollflächigen Form oder Vollform wird eine massive Biegeform verstanden mit einer Kontaktfläche, die mit der gesamten oder einem Großteil der Oberfläche der zu biegenden Scheibe in Kontakt kommt. Sie ist insbesondere zu unterscheiden von einer Rahmenform. Die untere Biegeform kann unter das Werkzeug zum Halten der Scheibe bewegt werden und die Scheibe kann zwischen dem Haltewerkzeug und der unteren Biegeform einem Pressbiegeschritt unterzogen werden. Die untere Biegeform kann mit Öffnungen versehen sein, durch die eine Saugwirkung auf die Scheibe ausgeübt werden kann, um die Scheibe weiter zu verformen.

In einer vorteilhaften Ausgestaltung umfasst die Vorrichtung außerdem eine Schwerkraftbiegeform, welche auf einem Wagen gelagert ist und welche zwischen der Biegekammer und der äußeren Umgebung bewegbar ist. Die bewegliche Schwerkraftbiegeform ist insbesondere dazu geeignet, die zu biegende Glasscheibe von außen in die Biegekammer hinein zu transportieren. Die Schwerkraftbiegeform weist eine konkave Kontaktfläche auf, bevorzugt eine rahmenförmige Kontaktfläche. Nach Erwärmen der Scheibe auf Erweichungstemperatur in der Biegekammer oder einem vorgelagerten Ofen legt sich die Scheibe unter dem Einfluss der Schwerkraft an die Kontaktfläche an, wodurch eine Vorbiegung erreicht wird. Die Schwerkraftbiegeform ist insbesondere unter das erfindungsgemäße Haltewerkzeug bewegbar, so dass die Scheibe oder die Scheiben durch das Haltewerkzeug von der Schwerkraftbiegeform übernommen werden kann. Typischerweise wird das Haltewerkzeug hierzu vertikal abgesenkt, grundsätzlich ist aber auch ein Anheben der Schwerkraftbiegeform oder eine Kombination beider Vertikalbewegungen möglich.

Die Aufgabe der Erfindung wird weiter gelöst durch ein Verfahren zum Biegen mindestens einer Glasscheibe, das in einer Biegekammer durchgeführt wird und mindestens einen Halteschritt umfasst, bei dem ein Werkzeug als eine obere Form verwendet wird, das eine nach unten gerichtete rahmenartige, konvexe Kontaktfläche und eine Abdeckung mit einem peripheren, die Kontaktfläche zumindest bereichsweise umgebenden Luftleitblech umfasst, um die Glasscheibe durch einen die Kante bestreichenden Luftstrom gegen den Einfluss der Schwerkraft am Werkzeug zu halten,
wobei der Luftstrom durch einen Ventilator erzeugt wird, welcher Luft über das Werkzeug und eine Zuleitung aus der Biegekammer absaugt, um den Luftstrom zu erzeugen, und über eine Rückleitung oberhalb des Werkzeugs wieder in die Biegekammer zurückleitet.

In einer vorteilhaften Ausführung wird das Verfahren simultan auf mindestens zwei, bevorzugt zwei aufeinander liegende Glasscheiben angewandt. Die Glasscheiben werden dabei paarweise (das heißt als Scheibenpärchen) simultan vom Werkzeug gehalten und im Biegeprozess gebogen. Die Biegung der beiden Glasscheiben ist dann besonders kongruent und aufeinander abgestimmt, so dass die Scheiben sich besonders eignen, miteinander zu einem Verbundglas hoher optischer Qualität laminiert zu werden. Durch die mittels des Ventilators erzeugte Saugwirkung können zwei oder auch mehr Scheiben sicher am Werkzeug gehalten werden.

In einer vorteilhaften Ausführung umfasst das Verfahren einen Pressbiegeschritt, wobei die Glasscheibe zwischen dem erfindungsgemäßen Haltewerkzeug und einer vollflächigen unteren Biegeform gebogen wird. Die untere Biegeform wird insbesondere unter das Haltewerkzeug bewegt, während die Glasscheibe an dem Haltewerkzeug fixiert ist. Anschließend werden Haltewerkzeug und untere Biegeform einander angenähert und die Glasscheibe dazwischen gepresst. Das Annähern kann durch vertikale Bewegung des Haltewerkzeugs und/oder der unteren Biegeform erfolgen.

In einer vorteilhaften Ausführung wird die zu biegende Glasscheibe oder Glasscheiben auf einer Schwerkraftbiegeform, welche auf einem Wagen beweglich gelagert ist, in die Biegekammer hinein transportiert. Die Scheibe wird auf der Schwerkraftbiegeform auf Erweichungstemperatur erhitzt und mittels Schwerkraftbiegen vorgebogen. Das Erwärmen der Scheibe auf Erweichungstemperatur kann in der Biegekammer oder einer vorgelagerten separaten Kammer erfolgen. Anschließend wird die Scheibe vom erfindungsgemäßen Haltewerkzeug von der Schwerkraftbiegeform übernommen und im weiteren Verlauf an eine weitere Form übergeben.

Das Verfahren ist in einer besonders bevorzugten Ausführung das Verfahren, welches in EP 1 836 136 B1 detailliert beschrieben ist, wobei der zum Halten der Glasscheiben an der dort beschriebenen oberen Form ("forme superieure 11") nötige Luftstrom erfindungsgemäß durch den Ventilator erzeugt wird. Das Verfahren wird bevorzugt mittels der Vorrichtung durchgeführt, die in EP 1 836 136 B1 detailliert beschrieben ist, wobei die Vorrichtung erfindungsgemäß um den Ventilator ergänzt wird.

Bevorzugt wird die Glasscheibe zunächst auf Biegetemperatur erwärmt und auf einer Schwerkraftbiegeform vorgebogen. Typischerweise wird die im Ausgangszustand plane Glasscheibe auf der Schwerkraftbiegeform positioniert. Die Schwerkraftbiegeform ist typischerweise beweglich ausgebildet, beispielsweise auf einem Wagen gelagert und durchläuft zum Erwärmen einen Ofen, wobei die Glasscheibe auf Biegetemperatur erwärmt wird. Unter Biegetemperatur wird dabei eine Temperatur verstanden, bei der die Glasscheibe ausreichend erweicht ist, um verformt werden zu können. Typische Biegetemperaturen betragen von 500 °C bis 700 °C, bevorzugt von 550 °C bis 650 °C. Die Schwerkraftbiegeform ist bevorzugt eine konkave, zum erfindungsgemäßen Werkzeug komplementäre Form. Durch das Erwärmen auf Biegetemperatur wird die Glasscheibe erweicht und schmiegt sich unter Wirkung der Schwerkraft an die Schwerkraftbiegeform an.

Die Glasscheibe wird also mittels Schwerkraftbiegen vorgebogen, bevor sie durch weitere Verfahrensschritte weiter gebogen wird.

Nach dem Vorbiegen wird die Glasscheibe durch das erfindungsgemäße Haltewerkzeug von der Schwerkraftbiegeform aufgenommen. Das Haltewerkzeug wird von oben an die Glasscheibe angenähert, was durch eine vertikale Bewegung des Haltewerkzeugs und/oder der Schwerkraftbiegeform erreicht werden kann. Das Haltewerkzeug wirkt also als obere Form. Bei ausreichend geringem Abstand wird die Glasscheibe durch die Saugwirkung an das Haltewerkzeug angesaugt und durch dieses gehalten. Die Glasscheibe wird dabei mit der Kontaktfläche in Kontakt gebracht, so dass die Kante der Glasscheibe zumindest abschnittsweise von dem Luftstrom bestrichen wird. Die Glasscheibe wird so durch das erfindungsgemäße Werkzeug von der Schwerkraftbiegeform übernommen.

Optional kann mit dem Ansaugen der Glasscheibe an das Werkzeug ein weiteres Biegen verbunden sein. Dies kann beispielsweise durch eine geeignete Formgebung der Kontaktfläche erreicht werden, so dass sich die Glasscheibe infolge der Saugwirkung an die Kontaktfläche anschmiegt und so gebogen wird. Das Werkzeug wirkt dann zugleich als Haltewerkzeug und Biegewerkzeug.

Bevorzugt wird die Glasscheibe nach dem Vorbiegen und der Übernahme durch das Haltewerkzeug einem Pressbiegeschritt unterzogen zwischen dem Haltewerkzeug und einer unteren Biegeform. Die Verformung der Glasscheibe erfolgt dabei durch Druck- und/oder Saugwirkung der beiden komplementären Biegewerkzeuge. Die untere Biegeform ist bevorzugt konkav, massiv (als Vollform) ausgebildet und besonders bevorzugt mit Öffnungen versehen. Bevorzugt wird durch die Öffnungen der unteren Biegeform eine Saugwirkung auf die Glasscheibe ausgeübt, welche geeignet ist, die Glasscheibe weiter zu verformen. Während des Pressbiegens ist die Glasscheibe zwischen den Formen fixiert, so dass die Saugwirkung der oberen Form ausgeschaltet werden kann. In diesem Fall verbleibt die Glasscheibe nach Trennung der Formen in der unteren Biegeform.

Die Glasscheibe wird bevorzugt nach dem Pressbiegen vom erfindungsgemäßen Haltewerkzeug an eine untere Ablageform übergeben, auf der sie aus der Biegekammer hinaus transportiert wird und abkühlt. Diese untere Form ist besonders bevorzugt eine Schwerkraftbiegeform. Es kann dieselbe Schwerkraftbiegeform sein, auf der die Scheibe in die Biegekammer hinein transportiert wurde, oder auch eine andere, die mit der ersten bevorzugt in einem Wagenzug angeordnet ist.

Es ist möglich, für das Übernehmen der Glasscheibe aus der Schwerkraftbiegeform (Vorbiegeform) und für das Übergeben der Glasscheibe von der unteren Biegeform (Pressbiegeform) auf die Ablageform zum Abkühlen zwei verschiedene erfindungsgemäße Haltewerkzeuge zu verwenden. Die beiden erfindungsgemäßen Haltewerkzeuge können beispielsweise eine unterschiedlich gestaltete Kontaktfläche haben, welche der unterschiedlichen Scheibenform in den verschiedenen Prozessphasen Rechnung tragen. Die beiden Werkzeuge können aber auch identisch ausgestaltet sein, wobei die Verwendung zweier Werkzeuge verfahrenstechnische Vorteile haben kann, beispielsweise hinsichtlich der Taktzeit, wie in EP 1 836 136 B1 beschrieben.

Die Glasscheibe oder die Glasscheiben enthalten bevorzugt Kalk-Natronglas, können aber alternativ auch andere Glassorten wie Borsilikatglas oder Quarzglas enthalten. Die Dicke der Glasscheiben beträgt typischerweise 0,5 mm bis 10 mm, bevorzugt 1 mm bis 5 mm.

Werden zwei oder mehrere Glasscheiben simultan gebogen, so ist zwischen den Scheiben bevorzugt ein Trennmittel angeordnet, so dass die Scheiben nicht dauerhaft aneinander haften.

Die Erfindung umfasst außerdem die Verwendung eines Ventilators in einer Glasbiegevorrichtung zur Erzeugung eines Luftstroms zum Halten mindestens einer Glasscheibe an einem Werkzeug durch eine Saugwirkung, wobei der Luftstrom erzeugt wird, indem Luft über das Werkzeug und eine Zuleitung aus einer Biegekammer abgesaugt wird und über eine Rückleitung wieder in die Biegekammer zurückgeleitet wird, wobei die Rückleitung oberhalb des Werkzeugs an die Biegekammer angeschlossen ist. Das Werkzeug umfasst dabei insbesondere eine nach unten gerichtete rahmenartige, konvexe Kontaktfläche und eine Abdeckung mit einem peripheren, die Kontaktfläche zumindest bereichsweise umgebenden Luftleitblech.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch ein Werkzeug zum Halten mindestens einer Glasscheibe durch eine Saugwirkung,
- Fig. 2: einen Querschnitt durch eine Ausgestaltung der erfindungsgemäßen Glasbiegevorrichtung mit dem Werkzeug,
- Fig. 3: eine schrittweise Darstellung einer Ausführungsform des erfindungsgemäßen Verfahrens und
- Fig. 4: ein Flussdiagramm einer Ausführungsform des erfindungsgemäßen Verfahrens.

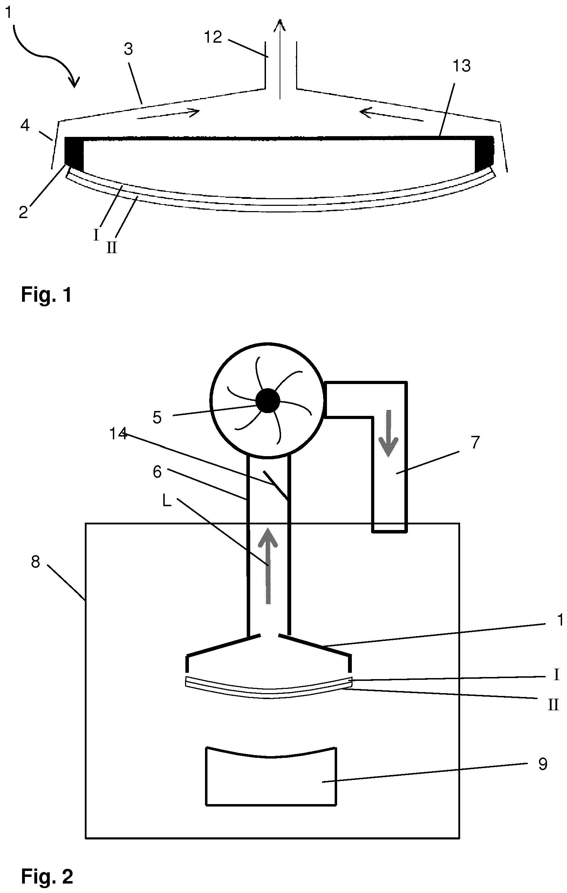

Figur 1 zeigt ein an sich bekanntes Werkzeug 1 zum Halten mindestens einer Glasscheibe durch eine Saugwirkung (Haltewerkzeug). Das Werkzeug 1 ist eine obere Form, welche geeignet ist, zwei aufeinander liegende Glasscheiben I, II durch eine Saugwirkung gegen den Einfluss der Schwerkraft an einer rahmenartigen, konvexen Kontaktfläche 2 zu halten. Die Kontaktfläche 2 ist auf einem sogenannten Skelett 13 angeordnet. Zur Erzeugung der Saugwirkung umfasst das Werkzeug 1 ein Ansaugrohr 12, über das Luft abgesaugt wird. Das Werkzeug verfügt weiter über eine Abdeckung 3, deren Ende mit einem umlaufenden Luftleitblech 4 ausgestattet ist. Das Luftleitblech 4 umgibt die Kontaktfläche 2 umlaufend. Durch das Biegeskelett 13 und die Abdeckung 3 mit dem Luftleitblech 4 wird der durch das Ansaugrohr 12 erzeugte Luftstrom so geleitet, dass er die Kanten der Glasscheiben bestreicht. Dadurch wird das Glasscheibenpaar I, II sicher an der Kontaktfläche 2 gehalten.

Die Scheiben I, II sind vorgebogen, beispielsweise durch Schwerkraftbiegen in einer unteren Biegeform. Das dargestellte Werkzeug kann beispielsweise verwendet werden, um das Glasscheibenpaar I, II aus der unteren Form aufzunehmen und an eine andere Form zu übergeben. Beispielsweise kann das Glasscheibenpaar I, II einem Pressbiege-Prozess unterzogen werden, wobei es zwischen dem dargestellten Werkzeug und einer Gegenform unter Einwirkung von Druck- und/oder Saugwirkung verformt wird.

Das dargestellte Werkzeug und Biegeverfahren, bei denen es eingesetzt werden kann, sind aus EP 1 836 136 B1, WO 2012/080071 A1 und WO 2012/080072 A1 bekannt.

Figur 2 zeigt eine erfindungsgemäße Glasbiegevorrichtung, welche das an sich bekannte Werkzeug 1 aus Figur 1 in einer Biegekammer 8 enthält. Die Biegekammer 8 ist mittels einer nicht dargestellten Heizeinrichtung erwärmbar auf eine Temperatur über der Erweichungstemperatur der zu biegenden Scheiben. Die Vorrichtung umfasst eine auf einem Wagen beweglich gelagerte Schwerkraftbiegeform 9, auf der im dargestellten Zustand ein zu biegendes Glasscheibenpaar I, II in die Biegekammer 8 hinein transportiert worden ist und mittels Schwerkraftbiegen vorgebogen worden ist. Im dargestellten Zustand ist das Glasscheibenpaar I, II vom Werkzeug 1 aufgenommen worden und durch die Saugwirkung sicher an diesem fixiert.

Die erforderliche Saugwirkung wird durch einen Luftstrom L hervorgerufen, der erfindungsgemäß mittels eines Ventilators 5 erzeugt wird, der oberhalb der Biegekammer 8 angeordnet ist. Der Ventilator 5 saugt Luft über das Werkzeug 1 und eine daran angeschlossene Zuleitung 6 aus der Biegekammer 8 ab. Die Zuleitung 6 ist an das vorstehend beschriebene Ansaugrohr des Werkzeugs 1 angeschlossen. Über eine Rückleitung 7 wird der Luftstrom L wieder in die Biegekammer 8 zurückgeführt, und zwar an der Oberseite der Biegekammer 8. Die Zuleitung 6 ist mit einer Klappe 14 versehen, durch die die Stärke des Luftstroms L reguliert und der Luftstrom L unterbrochen werden kann, ohne die Drehgeschwindigkeit des Ventilators 5 zu ändern.

Der erfindungsgemäße Kreislauf aus Zuleitung 6, Ventilator 5 und Rückleitung 7 zur Erzeugung des Luftstroms L ermöglicht eine deutliche Energieersparnis. Es kann auf aufwendige, mit vorgeheizter Pressluft betriebene Venturi-Düsen verzichtet werden. Durch die Rückführung der Luft wird wenig Energie aus dem System abgeleitet. Die Luftkompression durch den Ventilator 5 führt zu einer Erwärmung, welche die Abkühlung der Luft außerhalb der Biegekammer 8 im Wesentlichen kompensiert, so dass der Kreislauf nicht mit einer separaten Heizvorrichtung ausgestattet werden muss. Durch die Einleitung der Luft an der Oberseite der Biegekammer 8, wodurch die Glasscheiben I, II nicht mit dem rückfließenden Luftstrom L beaufschlagt werden, ist der Einfluss auf den Biegeprozess vernachlässigbar - das Glasbiegen wird nicht gestört. Das sind große Vorteile der Erfindung.

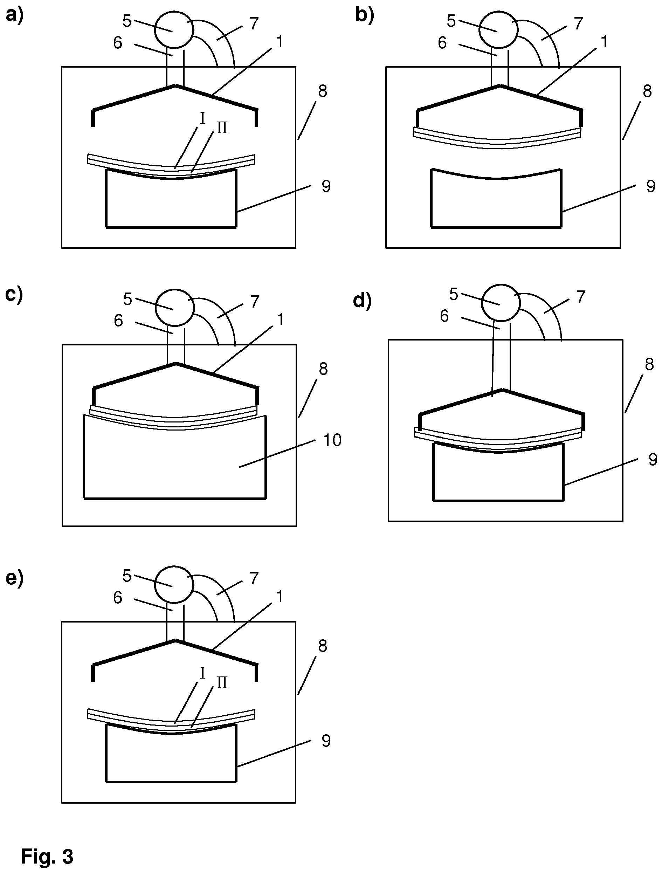

Figur 3 zeigt schematisch die Schritte einer Ausführungsform des erfindungsgemäßen Verfahrens. Zunächst werden zwei aufeinander liegende Glasscheiben I, II, welche im Ausgangszustand plan sind, auf einer Schwerkraftbiegeform 9 positioniert und auf dieser in die Biegekammer transportiert. Die Glasscheiben I, II werden auf Biegetemperatur, beispielsweise 600 °C, erhitzt, so dass sie sich unter Einwirkung der Schwerkraft an die Schwerkraftbiegeform 9 anschmiegen. Das Erhitzen erfolgt beispielsweise in einem Tunnelofen, der Teil der Biegekammer 8 oder dieser vorgelagert ist. Innerhalb der Biegekammer 8 werden die vorgebogenen Glasscheiben I, II auf der Schwerkraftbiegeform 9 unterhalb des Werkzeugs 1 zum Halten der Glasscheiben I, II positioniert (Teil a). Das Werkzeug 1 wird abgesenkt und dann wird die Klappe 14 geöffnet, wodurch die Saugwirkung auf die Glasscheiben I, II wirkt, welche dann mit dem Werkzeug 1 von der Schwerkraftbiegeform 9 abgehoben werden (Teil b). Anschließend wird eine vollflächige untere Saugbiegeform 10 unter dem Werkzeug 1 positioniert. Die Saugbiegeform 10 kann beispielsweise auf einem Arm montiert sein und zwischen Werkzeug 1 und Schwerkraftbiegeform 9 eingefahren werden. Die Glasscheiben I, II werden zwischen dem Werkzeug 1 und der Saugbiegeform 10 durch Pressbiegen in ihre endgültige Form gebogen (Teil c). Während des Pressbiegens wird die Saugwirkung des oberen Werkzeugs 1 ausgeschaltet. Nach dem Pressbiegen werden die Glasscheiben I, II wieder vom Werkzeug 1 aufgenommen. Die Saugbiegeform 10 wird anschließend wieder entfernt und die Glasscheiben I, II werden vom Werkzeug 1 auf eine Schwerkraftbiegeform 9 abgelegt (Teil d, e). Auf dieser Schwerkraftbiegeform 9 werden die Glasscheiben I, II aus dem Biegeofen 8 hinaustransportiert und abgekühlt.

Die hier schematisch dargestellten Verfahrensschritte geben das in EP 1 836 136 B1 detaillierter beschriebene Verfahren wieder, wobei die dort verwendete Glasbiegevorrichtung zur Erzeugung des Luftstroms L um den Kreislauf aus Zuleitung 6, Ventilator 5 und Rückleitung 7 ergänzt wurde.

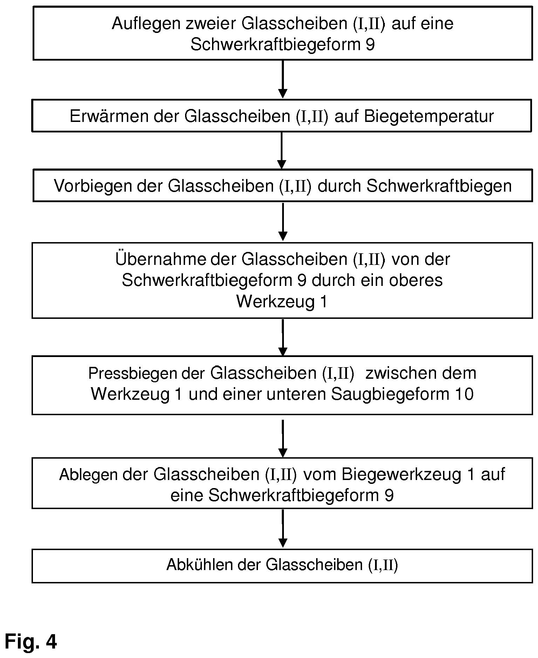

Figur 4 zeigt das Ausführungsbeispiel gemäß Figur 3 anhand eines Flussdiagramms.

### Bezugszeichenliste:

- (1): Werkzeug zum Halten mindestens einer Glasscheibe
- (2): rahmenartige Kontaktfläche
- (3): Abdeckung
- (4): Luftleitblech
- (5): Ventilator
- (6): Zuleitung
- (7): Rückleitung
- (8): Biegekammer

- (9): Schwerkraftbiegeform
- (10): untere Biegeform

- (12): Ansaugrohr von 1
- (13): Skelett von 1
- (14): Klappe von 6

- (L): Luftstrom

- (I): Glasscheibe
- (II): Glasscheibe

## Patentansprüche

1. Glasbiegevorrichtung, umfassend
- eine Biegekammer (8),
- ein Werkzeug (1) zum Halten mindestens einer Glasscheibe (I,II) durch eine Saugwirkung, umfassend eine nach unten gerichtete rahmenartige, konvexe Kontaktfläche (2) und eine Abdeckung (3) mit einem peripheren, die Kontaktfläche (2) zumindest bereichsweise umgebenden Luftleitblech (4), wobei das Werkzeug (1) dazu geeignet ist, die Kante der Glasscheibe (I,II) zumindest abschnittsweise mit einem Luftstrom (L) zu bestreichen und dadurch die Glasscheibe (I,II) an die Kontaktfläche (2) anzudrücken, und
- einen Ventilator (5), der über eine Zuleitung (6) und eine Rückleitung (7) mit der Biegekammer (8) verbunden ist und dazu geeignet ist, Luft über das Werkzeug (1) und die Zuleitung (6) aus der Biegekammer (8) abzusaugen, um den Luftstrom (L) zu erzeugen, und über die Rückleitung (7) wieder in die Biegekammer (8) zurückzuleiten,
wobei die Rückleitung (7) oberhalb des Werkzeugs (1) an die Biegekammer (8) angeschlossen ist.

2. Glasbiegevorrichtung nach Anspruch 1, wobei die Rückleitung (7) derart an die Biegekammer (8) angeschlossen ist, dass die Glasscheibe (I,II) nicht mit dem rückfließenden Luftstrom (L) beaufschlagt wird.

3. Glasbiegevorrichtung nach Anspruch 1 oder 2, wobei die Rückleitung (7) an der Oberseite der Biegekammer (8) angeschlossen ist.

4. Glasbiegevorrichtung nach Anspruch 1 bis 3, wobei der Ventilator (5) neben oder oberhalb der Biegekammer (8) angeordnet ist.

5. Glasbiegevorrichtung nach einem der Ansprüche 1 bis 4, wobei der durch die Zuleitung (6), den Ventilator (5) und die Rückleitung (7) gebildete Kreislauf nicht mit einer Heizung ausgestattet ist.

6. Glasbiegevorrichtung nach einem der Ansprüche 1 bis 5, welche eine vollflächige untere Biegeform (10) umfasst, welche unter das Werkzeug (1) bewegbar ist, um die mindestens eine Glasscheibe (I,II) einem Pressbiegeschritt zwischen dem Werkzeug (1) und der unteren Biegeform (10) zu unterziehen.

7. Glasbiegevorrichtung nach einem der Ansprüche 1 bis 6, welche eine Schwerkraftbiegeform (9) umfasst, welche in die Biegekammer (8) hinein unter das Werkzeug (1) bewegbar ist.

8. Glasbiegevorrichtung nach einem der Ansprüche 1 bis 7, wobei die Zuleitung (6) mit einer beweglichen Klappe (14) ausgestattet ist, durch welche die Zuleitung (6) ganz oder teilweise verschlossen werden kann.

9. Verfahren zum Biegen mindestens einer Glasscheibe (I,II), das in einer Biegekammer (8) durchgeführt wird und mindestens einen Halteschritt umfasst, bei dem ein Werkzeug (1) als eine obere Form verwendet wird, das eine nach unten gerichtete rahmenartige, konvexe Kontaktfläche (2) und eine Abdeckung (3) mit einem peripheren, die Kontaktfläche (2) zumindest bereichsweise umgebenden Luftleitblech (4) umfasst, um die Glasscheibe (I,II) durch einen die Kante bestreichenden Luftstrom (L) gegen den Einfluss der Schwerkraft am Werkzeug (1) zu halten,
wobei der Luftstrom (L) durch einen Ventilator (5) erzeugt wird, welcher Luft über das Werkzeug (1) und eine Zuleitung (6) aus der Biegekammer (8) absaugt, um den Luftstrom (L) zu erzeugen, und über eine Rückleitung (8) oberhalb des Werkzeugs (1) wieder in die Biegekammer (8) zurückleitet.

10. Verfahren nach Anspruch 9, wobei zwei aufeinander liegende Glasscheiben (I,II) paarweise simultan gebogen werden.

11. Verfahren nach Anspruch 9 oder 10, wobei
- die Glasscheibe (I,II) auf einer Schwerkraftbiegeform (9) in die Biegekammer (8) transportiert wird und auf der Schwerkraftbiegeform (9) vorgebogen wird,
- die Glasscheibe (I,II) durch das Werkzeug (1) von der Schwerkraftbiegeform (9) aufgenommen wird.

12. Verfahren nach einem der Ansprüche 9 bis 11, welches einen Pressbiegeschritt umfasst, wobei die Glasscheibe (I,II) zwischen dem Werkzeug (1) und einer vollflächigen unteren Biegeform (10) gebogen wird.

13. Verfahren nach Anspruch 12, wobei die untere Biegeform (10) mit Öffnungen versehen ist und durch die Öffnungen eine Saugwirkung auf die Glasscheibe (I,II) ausgeübt wird, welche geeignet ist, die Glasscheibe (I,II) weiter zu verformen.

14. Verfahren nach Anspruch 12 oder 13, wobei die Glasscheibe (I,II) nach dem Pressbiegen auf eine untere Ablageform zum Abkühlen übergeben wird, bevorzugt auf eine Schwerkraftbiegeform (9).

15. Verwendung eines Ventilators (5) in einer Glasbiegevorrichtung zur Erzeugung eines Luftstroms (L) zum Halten mindestens einer Glasscheibe (I,II) an einem Werkzeug (1) durch eine Saugwirkung, wobei der Luftstrom (L) erzeugt wird, indem Luft über das Werkzeug (1) und eine Zuleitung (6) aus einer Biegekammer (8) abgesaugt wird und über eine Rückleitung (7) wieder in die Biegekammer (8) zurückgeleitet wird, wobei die Rückleitung (7) oberhalb des Werkzeugs (1) an die Biegekammer (8) angeschlossen ist.

## Claims

1. Glass bending device, comprising
- a bending chamber (8),
- a tool (1) for holding at least one glass pane (I,II) by means of a suction effect, comprising a downward-directed frame-like, convex contact surface (2) and a cover (3) with a peripheral air-guiding plate (4), surrounding the contact surface (2) at least in regions, wherein the tool (1) is suitable for sweeping the edge of the glass pane (I,II) at least in sections with an air flow (L) and thereby pressing the glass pane (I,II) against the contact surface (2), and
- a fan (5), which is connected to the bending chamber (8) via a feed line (6) and a return line (7) and is suitable for extracting air from the bending chamber (8) via the tool (1) and the feed line (6) to produce the air flow (L) and for returning air back into the bending chamber (8) via the return line (7),
wherein the return line (7) is connected to the bending chamber (8) above the tool (1).

2. Glass bending device according to claim 1, wherein the return line (7) is connected to the bending chamber (8) such that the glass pane (I,II) is not impacted by the air flow (L) flowing back.

3. Glass bending device according to claim 1 or 2, wherein the return line (7) is connected on the top of the bending chamber (8).

4. Glass bending device according to claim 1 through 3, wherein the fan (5) is arranged next to or above the bending chamber (8).

5. Glass bending device according to one of claims 1 through 4, wherein the circuit formed by the feed line (6), the fan (5), and the return line (7) is not equipped with a heater.

6. Glass bending device according to one of claims 1 through 5, which includes a full-surface lower bending mould (10), which is movable under the tool (1), in order to subject the at least one glass pane (I,II) to a press-bending step between the tool (1) and the lower bending mould (10).

7. Glass bending device according to one of claims 1 through 6, which includes a gravity bending mould (9), which is movable into the bending chamber (8) under the tool (1).

8. Glass bending device according to one of claims 1 through 7, wherein the feed line (6) is equipped with a movable flap (14), by means of which the feed line (6) can be completely or partially sealed.

9. Method for bending at least one glass pane (I,II), which is carried out in a bending chamber (8) and includes at least one holding step, in which a tool (1) is used as an upper mould, which includes a downward-directed frame-like, convex contact surface (2) and a cover (3) with a peripheral air-guiding plate (4), surrounding the contact surface (2) at least in regions in order to hold the glass pane (I,II) on the tool (1) by means of an airflow (L) sweeping the edge against the effect of gravity,
wherein the air flow (L) is produced by a fan (5), which extracts air from the bending chamber (8) via the tool (1) and a feed line (6) to produce the air flow (L), and returns it back into the bending chamber (8) via a return line (8) above the tool (1).

10. Method according to claim 9, wherein two glass panes (I,II) lying one atop the other are bent simultaneously as a pair.

11. Method according to claim 9 or 10, wherein
- the glass pane (I,II) is transported on a gravity bending mould (9) into the bending chamber (8) and is pre-bent on the gravity bending mould (9),
- the glass pane (I,II) is taken over from the gravity bending mould (9) by the tool (1).

12. Method according to one of claims 9 through 11, which includes a press-bending step, wherein the glass pane (I,II) is bent between the tool (1) and a full-surface lower bending mould (10).

13. Method according to claim 12, wherein the lower bending mould (10) is provided with openings and a suction effect, which is suitable for further deforming the glass pane (I,II), is exerted on the glass pane (I,II) through the openings.

14. Method according to claim 12 or 13, wherein the glass pane (I,II), after press-bending, is transferred to a lower tray mould for cooling, preferably to a gravity bending mould (9).

15. Use of a fan (5) in a glass bending device to produce an air flow (L) for holding at least one glass pane (I,II) against a tool (1) by means of a suction effect, wherein the air flow (L) is produced in that air is extracted from a bending chamber (8) via the tool (1) and a feed line (6) and is returned back into the bending chamber (8) via a return line (7), wherein the return line (7) is connected to the bending chamber (8) above the tool (1).

## Revendications

1. Dispositif de bombage de verre, comportant
- une chambre de bombage (8) ;
- un outil (1) pour le maintien d'au moins une feuille de verre (I, II) par un effet d'aspiration, comportant une surface de contact (2) convexe, en forme de cadre, dirigée vers le bas, et un capot (3) ayant une plaque de guidage d'air (4) périphérique, entourant au moins par régions la surface de contact (2), l'outil (1) étant adapté pour balayer la bordure de la feuille de verre (I, II) au moins par parties par un courant d'air (L) et par là presser la feuille de verre (I, II) sur la surface de contact (2) ; et
- un ventilateur (5), qui est relié à la chambre de bombage (8) par une conduite d'alimentation (6) et une conduite de retour (7) et est adapté pour aspirer l'air hors de la chambre de bombage (8) par l'outil (1) et la conduite d'alimentation (6), afin de générer le courant d'air (L), et de le réinjecter dans la chambre de bombage (8) par la conduite de retour (7), la conduite de retour (7) étant raccordée à la chambre de bombage (8) au-dessus de l'outil (1).

2. Dispositif de bombage selon la revendication 1, dans lequel la conduite de retour (7) est raccordée à la chambre de bombage (8) de telle sorte que la feuille de verre (I, II) n'est pas impactée par le courant d'air (L) s'écoulant en retour.

3. Dispositif de bombage selon l'une des revendications 1 ou 2, dans lequel la conduite de retour (7) est raccordée au côté supérieur de la chambre de bombage (8).

4. Dispositif de bombage selon l'une des revendications 1 à 3, dans lequel le ventilateur (5) est disposé à côté ou au-dessus de la chambre de bombage (8).

5. Dispositif de bombage selon l'une des revendications 1 à 4, dans lequel le circuit formé par la conduite d'alimentation (6), le ventilateur (5) et la conduite de retour (7) n'est pas doté d'un chauffage.

6. Dispositif de bombage selon l'une des revendications 1 à 5, qui comporte une forme de bombage inférieure (10) de pleine surface, qui est mobile sous l'outil (1), afin de soumettre ladite au moins une feuille de verre (I, II) à une étape de bombage par pressage entre l'outil (1) et la forme de bombage inférieure (10).

7. Dispositif de bombage selon l'une des revendications 1 à 6, qui comporte une forme de bombage par gravité (9), qui est mobile dans la chambre de bombage (8) sous l'outil (1).

8. Dispositif de bombage selon l'une des revendications 1 à 7, dans lequel la conduite d'alimentation (6) est dotée d'un clapet mobile (14), au moyen duquel la conduite d'alimentation (6) peut être fermée totalement ou partiellement.

9. Procédé de bombage d'au moins une feuille de verre (I, II), qui est effectué dans une chambre de bombage (8) et comporte au moins une étape de maintien, dans laquelle un outil (1) est utilisé en tant que forme supérieure, qui comporte une surface de contact (2) convexe, en forme de cadre, dirigée vers le bas, et un capot (3) ayant une plaque de guidage d'air (4) périphérique, entourant au moins par régions la surface de contact (2), afin de maintenir la feuille de verre (I, II) sur l'outil (1) par un courant d'air (L) balayant la bordure à l'encontre de l'effet de la gravité,
dans lequel le courant d'air (L) est réalisé par un ventilateur (5), lequel aspire l'air hors de la chambre de bombage (8) par l'outil (1) et une conduite d'alimentation (6), pour générer le courant d'air (L), et le réinjecter dans la chambre de bombage (8) par une conduite de retour (8) au-dessus de l'outil (1).

10. Procédé selon la revendication 9, dans lequel deux feuilles de verre superposées (I, II) sont bombées simultanément par paires.

11. Procédé selon l'une des revendications 9 ou 10, dans lequel
- la feuille de verre (I, II) est transportée dans la chambre de bombage (8) sur une forme de bombage par gravité (9) et est prébombée sur la forme de bombage par gravité (9) ;
- la feuille de verre (I, II) est reprise de la forme de bombage par gravité (9) par l'outil (1).

12. Procédé selon l'une des revendications 9 à 11, lequel comporte une étape de bombage par pressage, la feuille de verre (I, II) étant bombée entre l'outil (1) et une forme de bombage inférieure (10) à pleine surface.

13. Procédé selon la revendication 12, dans lequel la forme de bombage inférieure (10) est dotée d'ouvertures et, à travers les ouvertures, un effet d'aspiration est exercé sur la feuille de verre (I, II), lequel est adapté pour déformer davantage la feuille de verre (I, II).

14. Procédé selon l'une des revendications 12 ou 13, dans lequel la feuille de verre (I, II) est transférée sur une forme de dépôt inférieure après le bombage par pressage pour le refroidissement, de préférence sur une forme de bombage par gravité (9).

15. Utilisation d'un ventilateur (5) dans un dispositif de bombage de verre pour la génération d'un courant d'air (L) pour le maintien d'au moins une feuille de verre (I, II) sur un outil (1) par un effet d'aspiration, le courant d'air (L) étant généré en ce que l'air est aspiré hors de la chambre de bombage (8) par l'outil (1) et une conduite d'alimentation (6) et est réinjecté dans la chambre de bombage (8) par une conduite de retour (7), la conduite de retour (7) étant raccordée à la chambre de bombage (8) au-dessus de l'outil (1).
